# EUROPEAN PATENT APPLICATION

(11) **EP 1 772 210 A2**
(43) Date of publication of application: **11.04.2007**
(21) Application number: 06255028.0
(22) Date of filing: 28.09.2006
(51) Int. Cl.: B22C 9/10, B29C 67/00

(54) **Methods for making ceramic casting cores and cores**

(30) Priority: 30.09.2005 US 240837
(71) Applicant: General Electric Company, Schenectady, NY 12345 (US)
(72) Inventor: Wang, Hsin-Pang, Rexford, New York 12148 (US); Lee, Ching-Pang, Cincinnati, Ohio 45243 (US); Jones, Marshall Gordon, Scotia, New York 12302 (US)
(74) Representative: Bedford, Grant Richard

(57) **Abstract**

A method for making a ceramic casting core is described. The casting core has a pre-selected shape, and is characterized as a plurality of parallel cross-sections. Each cross-section has a pre-selected pattern and thickness. The method includes the steps of melting a ceramic core material (16) with a laser beam (140) in a laser consolidation process, and depositing the molten material to form a first layer (116) in the pattern of a first cross-section of the core, the thickness of the first deposited layer (116) corresponding to the thickness of the first cross-section. A second layer (140) is formed in a similar manner, followed by the formation of additional layers, until the core is complete. A method of modifying the shape of an existing ceramic core with this process is also described, as is a method of making a gas turbine component by investment casting, using the ceramic core. Related articles and processes are also described.

## Description

This invention relates generally to the production of turbine engine components. More specifically, the invention relates to methods for producing ceramic cores used in the casting of such components.

Ceramic cores are often used for the investment casting of various types of precision components. Examples include turbine engine blades and vanes. When casting these types of components, the core must remain physically and chemically stable at high casting temperatures. Moreover, the core should be relatively non-reactive with the molten metal being cast, and must be readily leachable from the casting in a reasonable period of time. Furthermore, the core must meet stringent dimensional tolerances which are mandated by the users of the component which is cast around the core.

The ceramic cores must often contain complex details which are translated into the component being cast with the core. For example, gas turbine engine blades must often contain a complex pattern of internal cooling channels ("passages" or "passageways"), e.g., for multiple wall construction within the blade. (As those skilled in the art understand, components such as turbine blades often include an external wall and at least one internal wall spaced from the external wall, with a cooling passage disposed therebetween). Cooling air flows through the channels, and is then discharged - usually through a configuration of cooling holes at the airfoil surface. Thus, the core must contain reciprocal features which precisely replicate the features of the turbine blade. Examples of engine blade designs with multiple wall construction can be found in U.S. Patents 5,931,638 and 6,254,334.

Ceramic cores are usually made by conventional processes. Examples include transfer molding and injection molding. In the latter process, a mixture of ceramic particulates and a thermoplastic binder, such as wax, epoxy materials, and the like, are typically injected into a core die, which has two halves. After removal of the die, the core is then usually subjected to some sort of pre-baking step, to remove some or all of the binder, as well as any other volatile materials. Following the pre-bake, the core shape is fired at high temperatures, so as to produce a hardened ceramic core.

While the molding processes for making a core are acceptable in many instances, there are some drawbacks involved. For example, the binders used in the mixture can be very expensive. Moreover, treatment of the mixture to remove excess binder, as well as drying, pre-baking and sintering steps, can add to the expense and time required to carry out the process on a commercial level. (As described by Frank in U.S. Patent 5,014,763, some core making processes involve freezing steps, which can also be complicated).

In most of the injection molding processes, the two halves of the core die are opened after sintering is complete, and the finished core is extracted. As those skilled in the art understand, the border between the two halves of the core die is known as the "parting line". The core die is carefully designed so that the parting line is positioned at a location which ensures proper separation of the mold halves, to obtain a core with highly accurate, pre-selected dimensions.

While determination of the proper parting line for a core die has been relatively straightforward in the past, the development of more complex cores has recently made this task much more problematic. As an illustration, it may be relatively easy to select a parting line for a core which is used in casting single wall turbine blades. Those cores usually have a "2-dimensional" or "2.5-dimensional" geometry, and the die sections can be easily pulled apart in two directions (i.e., linearly) after the core is molded.

However, for a core having a geometry necessary for multiple-wall construction within a turbine, e.g., a core which is characterized by "3-dimensional geometry", selection of a parting line can be very difficult. The difficulty arises in part from the fact that the walls or segments designed for the core may not all be aligned with each other. In fact, it may not be possible to form such a core in a single injection into a conventional die, since the die sections of the core may have to be pulled apart in three different directions after the core is molded. Mold removal in that instance may prevent formation of a portion of the critical geometry of the core.

Attempts have been made to solve or minimize the problems involved in forming cores for complicated airfoil structures. For example, multiple cores can be formed by separate injections in an injection molding process. The individual cores can then be assembled into a composite core.

While the use of such a composite core is sometimes acceptable for a subsequent casting process, there are some considerable disadvantages. For example, the assembly step can be time-consuming and expensive. The assembly step also introduces a source of variation in the final dimensions of the cast article. These variations - even in the smallest degree - can result in the scrapping of the cast component.

In view of this discussion, it should be clear that new techniques for making ceramic casting cores would be welcome in the art. Methods which allow the formation of complex cores having multiple walls would be of considerable interest. Moreover, the elimination or minimization of the typical injection molding or transfer molding steps described above would also represent a considerable advance in the field of core manufacturing.

One embodiment of this invention is directed to a method for making a ceramic casting core, having a pre-selected shape, and characterized as a plurality of parallel cross-sections. Each cross-section has a pre-selected pattern and thickness. The method comprises the steps of:
(i) melting a ceramic core material with a laser beam, and depositing the molten material to form a first layer in the pattern of a first cross-section of the core, the thickness of the first deposited layer corresponding to the thickness of the first cross-section;
(ii) melting a ceramic core material with a laser beam and depositing the molten material to form a second layer in the pattern of a second cross-section of the article, at least partially overlying the first layer of deposited material, the thickness of the second deposited layer corresponding to the thickness of the second cross-section; and then
(iii) melting a ceramic core material with a laser beam and depositing the molten material to form successive layers in patterns of corresponding cross-sections of the core, at least one of the successive cross-sections partially overlying the underlying cross-section, wherein the molten material is deposited and the successive layers are formed until the core is complete.

A method of modifying the shape of a ceramic casting core is also described herein. The method comprises the step of applying additional ceramic material by a laser consolidation process to at least a portion of the casting core, according to a designated pattern, so that the core is modified in shape.

Another embodiment of the invention is directed to a method for making a component of a gas turbine. The method comprises the steps of:
(a) making a ceramic casting core by delivering a ceramic material to a laser consolidation system which is capable of depositing the ceramic material on a layer-by-layer basis, according to a pre-established pattern for the core, said pattern being incorporated into the laser consolidation system; and then heat-treating the casting core; and
(b) performing an investment casting process using the ceramic casting core as part of a mold-core assembly, to form the gas turbine component.

Ceramic casting cores made by methods described herein also constitute embodiments of this invention. Other features and advantages of the invention will be more apparent from the following detailed description of the invention, made in conjunction with the accompanying drawings, in which:
FIG. 1 is a schematic illustration of a laser consolidation system.
FIG. 2 is a detailed, schematic illustration of a laser consolidation apparatus.

The ceramic casting core of various embodiments of this invention is prepared by a laser consolidation process. Such a process is generally known in the art, and is referred to by a variety of other names as well. They include "laser cladding", "laser welding", "laser engineered net shaping", and the like. ("Laser consolidation" or "laser deposition" will usually be the terms used herein). Non-limiting examples of the process are provided in the following U.S. Patents, which are incorporated herein by reference: 6,429,402 (Dixon et al); 6,269,540 (Islam et al); 5,043,548 (Whitney et al); 5, 038,014 (Pratt et al); 4,730,093 (Mehta et al); 4,724,299 (Hammeke); and 4,323,756 (Brown et al). Information on laser consolidation cladding is also provided in many other references, such as "Deposition of Graded Metal Matrix Composites by Laser Beam Cladding", by C. Thieler et al., BIAS Bremen Institute (10 pages), at http://www.bias.de/aboutus/structure/Imb/Publikationen/Deposition%20of%20 graded.pdf (undated, with June 2005 website address).

In general, laser beam consolidation processes typically involve the feeding of a consumable powder or wire into a melt pool on the surface of a substrate. The substrate is usually a base portion of the article to be formed by the process. The melt pool is generated and maintained through the interaction with the laser beam, which provides a high-intensity heat source. As described by C. Thieler et al, the substrate is scanned relative to the beam. As the scanning progresses, the melted substrate region and the melted deposition material solidify, and a clad track is deposited on the surface. A layer is successively formed by tracks deposited side-by-side. Multilayer structures are generated by depositing multiple tracks on top of each other.

Ceramic core materials used in this process are known in the art. They are typically in powder form. In general, any ceramic material which is removable with a leaching material can be used. (Precursors to the desired ceramic materials could also be used). Non-limiting examples of suitable ceramics include alumina, zirconia, silica, yttria, magnesia, calcia, ceria, and combinations thereof. Alumina and alumina-containing mixtures are often the preferred core materials. As those skilled in the art understand, the core material may also include a variety of other additives, such as binders. As further described below, the powder size of the ceramic material will depend in large part on the type of powder, and the type of laser deposition apparatus.

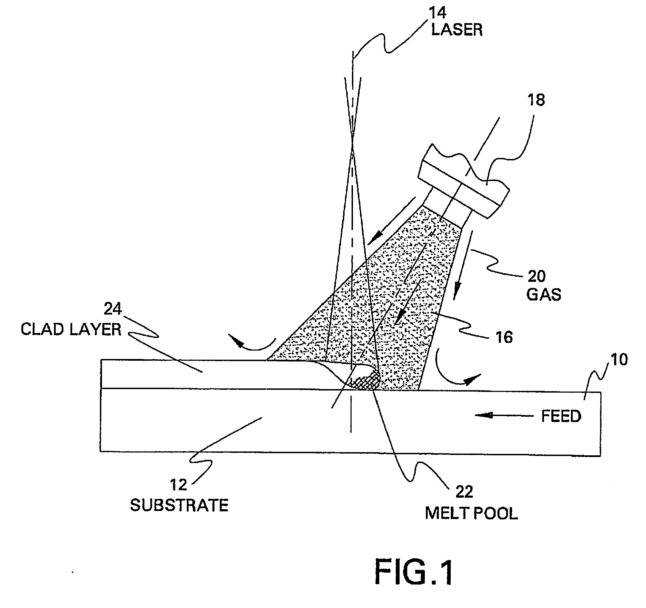

FIG. 1 is a simple illustration setting forth the general principles of a laser consolidation process. Formation of a desired article is taking place on surface 10 of substrate 12. Laser beam 14 is focused on a selected region of the substrate, according to conventional laser parameters described below. The ceramic feed material (deposition material) 16 is delivered from powder source 18, usually by way of a suitable carrier gas 20. The feed material is usually directed to a region on the substrate which is very close to the point where the energy beam intersects substrate surface 10. Melt pool 22 is formed at this intersection, and solidifies to form clad track 24. Multiple clad tracks deposited next to each other usually form a desired layer. As the deposition apparatus is incremented upwardly, the article progresses toward completion in 3-dimensional form.

As further described below, deposition of the feed material can be carried out under computerized motion control. One or more computer processors can be used to control the movement of the laser, the feed material stream, and the substrate. In general, computer-controlled laser consolidation according to an aspect of this invention usually begins with an analysis of the desired core article as being an assembly of sections or "slices" which are substantially parallel to each other. The article is then uniquely defined by specifying the pattern of each section, i.e., its shape and size, and the position of each section, in relation to the adjacent sections.

More specifically, those skilled in the art of computer-aided design (e.g., CADCAM) understand that the desired article can initially be characterized in shape from drawings, or from an article previously formed by conventional methods such as casting, machining, and the like. Once the shape of the article is numerically characterized, the movement of the article (or equivalently, the deposition head) is programmed for the laser deposition apparatus, using available numerical control computer programs. These programs create a pattern of instructions as to the movement of the part during each "pass" of the deposition implement, and its lateral displacement between passes. The resulting article reproduces the shape of the numerical characterization quite accurately, including complex curvatures and hollow regions of an airfoil, a core, or the like. U.S. Patent 5,038,014, referenced above, describes many other details regarding this type of deposition technique. U.S. Patents 6,429,402 and 6,269,540, are also instructive in this regard.

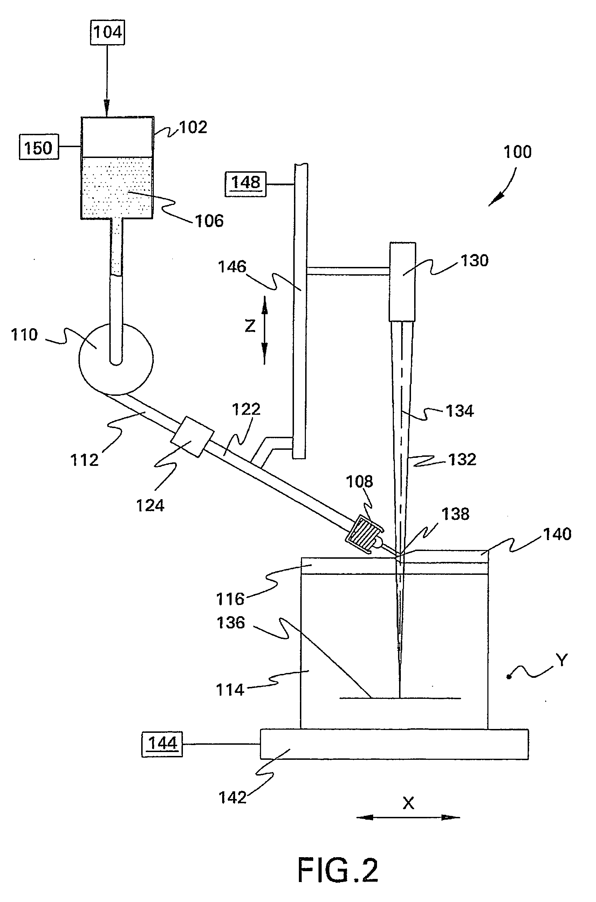

FIG. 2 is a general illustration of one type of laser cladding apparatus which is suitable for embodiments of this invention. Apparatus 100 includes a feed material reservoir 102. Reservoir 102 can be supplied by a supply chamber 104. The supply chamber contains the ceramic powder for the core. Conventional powder delivery systems often entrain the powder-particulate in a gas stream, e.g., an inert gas carrier which can be delivered from a separate gas supply source. (In addition to assisting in powder transport, the inert gas can also function to maintain powder in reservoir 102 under pressure). Details regarding such gas systems need not be included here. Reservoir 102 can be heated (e.g., by heating coils), so as to minimize moisture content in the powder supply.

Various mechanisms are available for carrying feed material 106 to powder delivery nozzle 108. As a non-limiting example, a conventional powder feed wheel 110, which is commercially available, could be employed. Alternatively, many other types of volumetric feeders are available, e.g., auger mechanisms, disc mechanisms, and the like. The powder wheel is cooperatively attached to conduit 112, which carries feed material 106 to delivery nozzle 108. Vibrating device 124, which can be in the form of a variety of mechanisms, is associated with conduit 112. The vibrating device inhibits powder particles moving through the conduit from adhering to its walls.

Conduit 112 terminates in the powder delivery nozzle 108 (sometimes referred to herein as the "powder head"). The powder head (usually assisted by a pressurized, inert gas) directs the powder to an upper surface of substrate 114, or to the surface of a previously-deposited layer 116. The shape, size, and orientation of the powder head can vary to a great extent. (As further described below, the number of powder heads can also be varied). The powder head can also be formed from a variety of materials, such as copper, bronze, aluminum, steel, or ceramic materials. As described in U.S. Patent 5,038,014, the powder head is usually fluid cooled, as by water, to enhance uniform flow of the powder. Fluid cooling also prevents the powder head from heating excessively as the laser beam passes through the head, or as energy from the melt pool ("weldpool") is reflected back toward the powder head. (However, fluid cooling is not always necessary).

Apparatus 100 further includes a laser 130. The laser emits a beam 132, having a beam axis 134. A wide variety of conventional lasers could be used, provided they have a power output sufficient to accomplish the melting function discussed herein. Carbon dioxide lasers operating within a power range of about 0.1 kw to about 30 kw are typically used, although this range can vary considerably. Non-limiting examples of other types of lasers which are suitable for this invention are fiber lasers, diode lasers, lamp-pumped solid state lasers, diode-pumped solid state lasers, and excimer lasers. These lasers are commercially available, and those skilled in the art are very familiar with their operation. The lasers can be operated in either a pulsed mode or a continuous mode.

Laser beam 132 usually has a focal plane 136 beneath the substrate surface. The focal plane is calculated to provide a selected beam spot 138 at the surface of the substrate. The size of the beam spot is usually in the range of about 0.2 mm to about 5 mm in diameter. However, the size can vary considerably, and may sometimes be outside of this range. The laser energy is selected so as to be sufficient to melt a pool of material generally coincident with the beam spot 138. Usually, the laser energy is applied with a power density in the range of about 10³ to about 10⁷ watts per square centimeter. In some preferred embodiments, the power density in the range of about 10⁵ to about 10⁷ watts per square centimeter.

As mentioned above, the layers of material are usually deposited by feeding powder 106 through conduit 122 into the molten pool at the beam spot 138. As relative lateral movement is provided between the laser beam spot and the article carrying its superimposed powder, progressive melting, cooling and solidification of the molten interaction zone occurs, producing a "bead" or layer. FIG. 2 depicts the first layer 116 of deposited material, while deposition of the next layer 140 is in progress. The angle at which the powder is fed can vary considerably, and is usually in the range of about 25°-70°, relative to the article surface. Those skilled in the laser deposition arts will be able to readily adjust the powder delivery angle to suit a particular situation, based on factors known in the art.

As shown in FIG. 2, the substrate 114 can be supported on a movable support 142. Support 142 can move the substrate in two linear directions: the "X" direction (both X and -X), and the "Y" direction (both Y and -Y, out of the plane of the illustration of FIG. 2). By controlling the combination of the X and Y direction-movement of support 142, while maintaining conduit 112 and laser 130 at a constant height, a well-defined layer can be deposited on the substrate, having the precise pattern (shape) for that particular section of the turbine blade.

In most instances, movement of support 142 along the first linear axis X and the second linear axis Y is carried out by some form of computerized motion control, e.g., using processor 144. A wide variety of computer-control systems can be employed. Most of them typically employ a CAD/CAM interface in which the desired pattern of movement is programmed.

Moreover, support table 142 can be used in conjunction with one or more additional support platforms, to further increase the directions in which support 142 (and substrate 114) can be manipulated. For example, the support platforms can be part of a complex, multi-axis computer numerically controlled (CNC) machine. These machines are known in the art and commercially-available. The use of such a machine to manipulate a substrate is described in a co-pending US application for S. Rutkowski et al, S.N. 10/622,063, filed on July 17, 2003, and incorporated herein by reference. As described in S.N. 10/622,063, the use of such a machine allows movement of the substrate along one or more rotational axes, relative to linear axes X and Y. As an example, a conventional rotary spindle (not shown in FIG. 2) could be used to provide rotational movement.

As shown in the embodiment of FIG. 2, the conduit 112 and laser 130 are rigidly supported on an apparatus support 146. The support is movable in the vertical "Z" direction (and the -Z direction), as shown in the figure. In this manner, conduit 112 and laser 130 can be raised or lowered.

In some embodiments, apparatus support 146 can be controlled by a processor 148, which can function cooperatively with processor 144. In this manner, support 146 and support 142 can be moved in at least three dimensions, relative to the article being formed. For example, by controlling the combination of the X- and Y-direction movement of support 142, while maintaining conduit 122 and laser 130 at a constant "Z" height, a well-defined layer can be deposited on the substrate. The layer, e.g., layer 140, would conform to the pattern required for that particular section of the turbine blade. (As those skilled in the art understand, the same type of X, Y, and Z movement could be carried out by manipulating support 142 in the Z direction, while manipulating support 146 in the X and Y direction).

As depicted in the embodiment of FIG. 2, as one layer is deposited, e.g., layer 116, the apparatus 100 can be incremented upwardly. As the apparatus is raised, conduit 122 and laser 130 are also raised, by an amount chosen to be the height or thickness of second layer 140. In this manner, layer 140 can be formed, overlying layer 116. (Again, FIG. 2 illustrates the deposition process at a stage when first layer 116 has been completely deposited, and second layer 140 is partially deposited). As layer 140 is deposited, an upper portion of layer 116 is usually re-melted, so as to form a welded bond between the layers.

As mentioned above, the composition for the ceramic core can be provided by feed material from supply chamber 104. A conventional tube or conduit can connect the feed chamber to feed material reservoir 102. Various types of volumetric feeders like those mentioned above could be used for each chamber. The powder can be gravity-fed to reservoir 102, and/or can be carried through with a carrier gas. Reservoir 102 can include conventional devices for mixing the ceramic core material (and any other ingredients), and for minimizing the amount of moisture retained therein. An optional processor 150 functions to coordinate the supply of ceramic core material to the reservoir. Thus, processor 150 can function in conjunction with processors 148 and 144. Coordination of all of the processors is based on the multi-axial movement of the substrate; its location and position at a particular point in time (i.e., the number of layers which have been formed over the substrate), and the pattern of computerized instructions which provide the specific composition for the next layer or set of layers in forming the core. It should also be noted that the computerized, multi-axial capability described herein advantageously permits the deposition of "overhang" material, i.e., material which does not have to be deposited directly onto an underlying substrate. For example, the substrate could sometimes be manipulated so that a section of deposited material would flow into a desired shape by means of gravity. Alternatively, a portion of the core material could be deposited onto a sacrificial support material. The sacrificial support material could also be deposited and shaped by laser deposition, and functions as a type of temporary substrate. The sacrificial support material could then be removed after formation of the core is complete, (e.g., by dissolving the material or burning it off), thereby leaving the desired overhang structure.

As those skilled in the art understand, processors like 144, 148 and 150 may refer, collectively, to a number of sub-processors. Moreover, it may be possible that all of the processors featured in FIG. 2 can be combined, e.g., their functions would be handled by a single processor. Those skilled in the arts, e.g., with a working knowledge of CNC systems and powder deposition, will be able to devise the best control system for a given situation, without undue effort.

Other details regarding a typical laser cladding process, using an apparatus like that of FIG. 2, are provided in various references, such as U.S. Patent 5,038,014. As a non-limiting example, a ceramic core could be formed, using a 3 kW carbon dioxide laser. The laser beam could be focused on a spot diameter of 0.356 cm on the substrate surface, to provide a power density of about 30 kW per square centimeter. The substrate surface and surrounding area could be maintained in an inert atmosphere (e.g., argon) during deposition. The powder delivery system would be substantially as depicted in FIG. 2. A typical ceramic powder (e.g., alumina) which is directed to the feed conduit might have an average particle size of about 50 microns to about 200 microns. The powder could be directed to the substrate surface at a rate of about 10 grams per minute. The height of each "bead" or layer formed would be about 0.015 inch (0.038 cm). To fabricate a core having a length of about 3 inches (7.6 cm), a total of about 200 passes may be required, under these operating conditions. A typical linear traverse rate of the substrate, relative to the laser beam, might be about 50 inches (127 cm) per minute, as the feed powder is deposited.

However, it should be emphasized that many variations are possible in regard to the laser and powder delivery systems for a laser consolidation process. In general, they are all within the scope of various embodiments of this invention, and need not be described in detail here. As one example, various types of concentric feed nozzles could be employed. One such type is described by Hammeke in U.S. Patent 4,724,299, referenced above. Hammeke describes a laser spray nozzle assembly, in which a laser beam passageway extends vertically through the housing of a nozzle body. The housing includes coaxial openings through which the laser can pass. A separate powder delivery system supplies powder from a direction perpendicular to the laser beam passageway, to an annular passage which communicates with the passageway. In this manner, the feed powder and the laser beam can converge at a common location. As in other laser consolidation systems, a melt pool is formed on an underlying work-piece, in a surface region coincident with the convergence of the laser beam and powder stream.

Another possible alternative relates to the manner in which the feed powder is delivered. In some preferred embodiments, the powder is fed into the melt pool on the substrate surface by multiple feed nozzles. For example, about 2 to 4 nozzles could be spaced equally around the circumference of the surface region at which deposition is taking place. Each nozzle could be supplied from a source similar to reservoir 102 in the embodiment of FIG. 2. A non-limiting example of a laser deposition system using multiple feed nozzles is provided in pending U.S. Patent Application 11/172,390, filed on June 30, 2005, for Bernard Bewlay et al. The contents of that patent application are incorporated herein by reference. The use of multiple powder nozzles allows deposition of the ceramic feed material from a variety of directions. In some cases, this causes the material "build-up" to become more uniform, as compared to deposition from a single direction. In turn, greater uniformity and consistency in the melting and subsequent solidification of each layer being deposited can result in a more uniform microstructure for the completed core.

The laser deposition process described herein can be extremely useful in the formation of complex cores having multiple walls and openings. (As used herein, "opening" is meant to include any type of space, passageway, hole, gap or cavity in a core. As a non-limiting example, the term can refer to 3-dimensional openings within a core). The computerized-control of the laser, powder-deposition head, and substrate platform allow the walls of the core to be built up in precise, incremental cross-sections. (For example, the spaces between the walls and other features of the core are preserved by programmed instructions which shut off powder deposition until the next region for a wall or other feature is "reached" by the robotic mechanism).

Such cores may be required in the formation of complex turbine airfoils with intricate patterns of cooling passageways. A non-limiting example of such a turbine airfoil is provided in U.S. Patent 5,931,638 (Krause et al), which is incorporated herein by reference. In that reference, the turbine blade of Figure 1 includes a large number of different types of cavities and conduits, e.g., serpentine passageways, mid-chord medial passageways, trailing edge feed passageways; radially-extending medial passageways, other conduits, and the like.

A variety of processes can be undertaken after fabrication of the core component by the laser deposition process. For example, machining steps can be used to attain or modify the precise geometric shape for the core. Examples of the machining techniques include electro-discharge machining (EDM), milling, and grinding. Polishing steps are also frequently undertaken. Moreover, conventional isostatic pressing operations can be used, e.g., to eliminate or minimize internal porosity in the core material. Appropriate heat treatments can also be performed on the core, for sintering, consolidation, and the like. (The heat treatments provide the core with sufficient strength to survive subsequent operations). In general, the use of the laser consolidation process described herein can reduce the time required for many of these post-fabrication steps, as compared to ceramic cores formed from conventional molding operations.

Ceramic cores prepared by embodiments of the present invention can be used in a variety of molding and casting processes. For example, the cores can be used in the investment casting of a multi-wall component like those described in U.S. Patent 5,931,638. As described previously, the core can be of a much higher complexity than the one-piece cores obtained by conventional techniques.

After the core has been heat-treated (e.g., "fired"), an investment casting process can be undertaken in accordance with industry practice. In such a process, the core is used as part of the mold-core assembly, to form the component, e.g., a turbine blade. Typically, the core and appropriate ancillary material known to those skilled in the art (e.g., positioning pins and support pins, sprues, gates, etc) are positioned in a mold appropriately shaped in accordance with the design of the component to be cast. Wax is then usually injected into the mold and solidified, to form a wax model. The wax model, containing the embedded core, is repeatedly dipped in ceramic slurry, to form a ceramic shell mold around the wax pattern. After removing the wax, all that remains is the ceramic core, disposed in and attached to the ceramic shell mold, thereby forming the mold-core assembly referred to above. After casting the component by solidifying molten metal in the mold-core assembly, the ceramic mold is removed, e.g., by chemical or mechanical means. The core can then be leached out by conventional techniques, e.g., use of a chemical removal agent.

Another embodiment of this invention relates to methods for repairing or modifying ceramic cores which have already been formed. For example, a ceramic core which was out of specification in one or more dimensions could be subjected to the laser deposition process described above, in which the core serves as the substrate surface. (The portion of the core which required modification could be ground down to a region below the region being modified). The computer-controlled deposition would re-form the core into a shape having the desired specifications. An advantage of using the laser deposition process is that the added material should have no detectable bond line or discontinuity with the original core portion after finishing, due to the welding phenomenon that has taken place. In this embodiment, the laser deposition step can be used in combination with other conventional steps (e.g., machining), to modify the shape of the core to suit a particular need.

Ceramic cores and their use in making turbine blades has been exemplified in this patent specification. However, many types of turbine components can benefit from the various embodiments of this invention. Non-limiting examples include buckets, nozzles, rotors, disks, vanes, stators, shrouds, combustors and blisks.

Although this invention has been described in terms of specific embodiments, they are intended for illustration only, and should not be construed as being limiting in any way. Thus, it should be understood that modifications can be made thereto, within the scope of the invention and the appended claims. All of the patents, patent applications, articles, and texts which are mentioned above are incorporated herein by reference.

### Parts List:

- 10: Surface of substrate
- 12: Substrate
- 14: Laser beam
- 16: Ceramic feed material
- 18: Powder source
- 20: Carrier gas
- 22: Melt pool
- 24: Clad track
- 100: Apparatus
- 102: Feed material reservoir
- 104: Supply chamber
- 106: Feed material
- 108: Delivery nozzle
- 110: Feed wheel
- 112: Conduit
- 114: Substrate
- 116: Layer
- 122: Conduit
- 124: Vibrating device
- 130: Laser
- 132: Laser beam
- 134: Laser beam axis
- 136: Focal plane
- 138: Beam spot
- 140: Layer
- 142: Movable support
- 144: Computer processor
- 146: Apparatus support
- 148: Computer processor
- 150: Computer processor

## Claims

1. A method for making a ceramic casting core, having a pre-selected shape, and **characterized** as a plurality of parallel cross-sections, each cross-section having a pre-selected pattern and thickness, comprising the steps of:
(i) melting a ceramic core material (106) with a laser beam (132), and depositing the molten material to form a first layer (116) in the pattern of a first cross-section of the core, the thickness of the first deposited layer corresponding to the thickness of the first cross-section;
(ii) melting a ceramic core material (106) with a laser beam (132) and depositing the molten material to form a second layer (140) in the pattern of a second cross-section of the article, at least partially overlying the first layer (116) of deposited material, the thickness of the second deposited layer corresponding to the thickness of the second cross-section; and then
(iii) melting a ceramic core material (106) with a laser beam (132) and depositing the molten material to form successive layers in patterns of corresponding cross-sections of the core, at least one of the successive cross-sections partially overlying the underlying cross-section, wherein the molten material is deposited and the successive layers are formed until the core is complete.

2. The method of claim 1, wherein, during each step of melting the core material (106) and depositing the molten material over a previously-deposited core material, a portion of the previously-deposited material is melted, so as to form a welded bond between the layers.

3. The method of claim 1 or claim 2, wherein the ceramic core material is selected from the group consisting of alumina, zirconia, silica, yittria, magnesia, calcia, ceria, and combinations thereof.

4. The method of any preceding claim, wherein the ceramic casting core comprises at least one opening.

5. The method of claim 4, wherein the ceramic casting core comprises multiple openings in a pattern which defines the channels of a turbine engine component.

6. The method of claim 5, wherein the turbine engine component is formed in a casting process which comprises the use of the ceramic casting core.

7. A method for making a ceramic casting core suitable for the investment-casting of a turbine engine blade, comprising the step of delivering a ceramic core material (106) to a laser consolidation system (100) which is capable of depositing the ceramic material on a layer-by-layer basis, according to a pre-established pattern for the core, said pattern being incorporated into the laser consolidation system.

8. A method of modifying the shape of a ceramic casting core, comprising the step of applying additional ceramic material by a laser consolidation process to at least a portion of the casting core, according to a designated pattern, so that the core is modified in shape.

9. A method for making a component of a gas turbine, comprising the steps of:
(a) making a ceramic casting core by delivering a ceramic material (106) to a laser consolidation system (100) which is capable of depositing the ceramic material on a layer-by-layer basis, according to a pre-established pattern for the core, said pattern being incorporated into the laser consolidation system; and then heat-treating the casting core; and
(b) performing an investment casting process using the ceramic casting core as part of a mold-core assembly, to form the gas turbine component.

10. A ceramic casting core made by the method of any preceding claim.
